(19)

Europäisches Patentamt
European Patent Office
Office européen des brevets

(11) **EP 3 961 321 A1**

(12) **EUROPEAN PATENT APPLICATION**

(43) Date of publication:
**02.03.2022 Bulletin 2022/09**

(21) Application number: **20193083.1**

(22) Date of filing: **27.08.2020**

(51) International Patent Classification (IPC):
**G05B 19/4069** (2006.01)

(52) Cooperative Patent Classification (CPC):
**G05B 19/4069; G05B 19/4063; G05B 19/4065**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **B R, Chethan Ravi**
 **577134 Chickmagalur District, Karnataka (IN)**
• **NAIR, P.V.Sudev**
 **560078 Bangalore, Karnataka (IN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **SYSTEM AND METHOD FOR INSTANTANEOUS PERFORMANCE MANAGEMENT OF A MACHINE TOOL**

(57)      A system (100), apparatus (110) and method for instantaneous performance management of a machine tool (105) is disclosed. The method comprises receiving real-time condition data associated with one or more components (225) of the machine tool (105) from one or more sources (115). Further, at least one parameter value associated with the one or more critical components, which is likely to affect a performance of the machine tool (105), is computed based on the condition data. Further, a digital twin of the machine tool (105) is configured based on the parameter value to simulate a behavior of the one or more critical components in a simulation environment. Further, an impact on the performance of the machine tool (105) is predicted based on the simulated behavior of the one or more critical components. Further, an operation of the machine tool (105) is optimized based on the predicted impact.

FIG 1A

EP 3 961 321 A1

**Description**

The present invention relates to the field of machine tools, and more particularly relates to a system, apparatus and method for instantaneous performance management of a machine tool.

Machine tools play a crucial role in many industries for machining rigid materials to a suitable form. Machining of a workpiece may be performed through different types of operations such as cutting, milling, shearing and boring. Each of these operations are carried out by a suitable cutting tool attached to a spindle on the machine tool. The movement of the workpiece with respect to cutting tool is controlled by a guiding mechanism. However, vibrations in the cutting tool, spindle or components of the guiding mechanism result in formation of chatter marks on the workpiece. Therefore, performance of the machine tool is governed by dynamics of different components of the machine tool. The dynamics also varies based condition of the components. For example, wearing off of the cutting tool results in poor quality of machining.

In light of the above, there exists a need for instantaneous performance management of a machine tool based on real-time condition data.

Therefore, it is the object of the present invention to provide a system, apparatus and method for instantaneous performance management of machine tools. The object of the present invention is achieved by a method for instantaneous performance management of a machine tool as disclosed herein. The term 'machine tool' as used herein refers to a Computerised Numerical Control (CNC) machine. The CNC machine may be of different types such as CNC milling machines, CNC drilling machines, CNC lathe, CNC turning centers, CNC Plasma-Cutting Machine, CNC special-purpose machines and CNC grinders. The CNC machine may include any number of axes. For example, the number of axes may be one of 2, 2.5, 3, 4, 5, 9, 10 and so on. The term 'instantaneous performance as used herein, refers to a performance of the machine tool in real-time. The term 'performance' as used herein refers to metrics that affect a productivity of the machine tool. In the present disclosure, the performance may be measured in terms, for example, cycle time, stability or accuracy of machining.

The method comprises receiving real-time condition data associated with one or more components of the machine tool from one or more sources. The one or more sources may include, but are not limited to, a controller of the machine tool, sensing units and an edge device. The sensing units include, but are not limited to, position sensors, rotary encoders, dynamometers, proximity sensors, current sensors, accelerometers, temperature sensors and acoustic sensors. The real-time condition data is indicative of one or more operating conditions of the machine tool in real-time. The condition data may be associated with sensor data, operating conditions and specifications of the machine tool. The term 'sensor data' as used herein, refers to an output of the one or more sensing units associated with the machine tool. The term 'operating conditions' include parameters that are set by an operator. The operating conditions may include, for example, type of machining operation, type of cutting tool, tool settings, Automatic Tool Changer (ATC) settings, feed rate, cutting speed, spindle speed, spindle power, axis torques, axis speeds, axis power, number of strokes per minute for each axis and range of the strokes. Further, the operating conditions may also include data associated with G-codes, M-codes and Computer-Aided Design models based on which the machine tool machines a workpiece. The term 'specifications' as used herein refers to specifications associated with a type and a maximum capacity of the machine tool as provided by an Original Equipment Manufacturer (OEM) of the machine tool. The specifications may include, but are not limited to, torque and power of a spindle, size of the spindle, number of axes, power of axes, strokes, dimensions of the machine tool and motor ratings. Similarly, the specifications also include capacities associated with components of the machine tool, as specified by the OEM.

The operating conditions may be set by an operator of the machine tool or preset by the OEM of the machine tool. Further, the condition data may also includes non-operational parameters such as material testing data associated with a workpiece attached to the machine tool. The one or more components include, but are not limited to, bed, column, spindle, cutting tool, spindle motor, ball-screw, lead-screw, linear motion guide, axis motors and table.

The method further comprises computing at least one parameter value associated with one or more critical components which is likely to affect a performance of the machine tool based on the condition data. In one embodiment, computing the at least one parameter value associated with the one or more critical components comprises computing a stiffness value associated with the one or more critical components based on the condition data. The term 'stiffness value' as used herein, refers to an extent to which a component resist deformation. For example, the stiffness values may be expressed as a torsion constant or using Young's modulus. The stiffness value may correspond to at least one of static stiffness and dynamic stiffness. The dynamic stiffness is a ratio between a dynamic force on the component and a resulting dynamic displacement of the component. The static stiffness is a ratio between a static force on the component and the resulting static deflection of the component. The stiffness value provides information on variations in stiffness of the one or more critical components with temperature. For example, during cutting, the stiffness of the spindle varies with temperature. The variation in the stiffness impacts accuracy of machining and also the performance of the machine tool.

Advantageously, the present invention present invention uses real-time condition data of the machine tool for computing the stiffness value of the one or more critical components in real-time.

The method further comprises configuring a digital twin of the machine tool based on the parameter value. In one implementation, the digital twin is a dynamic virtual replica based on one or more of physics-based models, Computer-Aided Design (CAD) models, Computer-Aided Engineering (CAE) models, one-dimensional (1D) models, two-dimensional (2D) models, three-dimensional (3D) models, finite-element (FE) models, descriptive models, metamodels, stochastic models, parametric models, reduced-order models, statistical models, heuristic models, prediction models, ageing models, machine learning models, Artificial Intelligence models, deep learning models, system models, knowledge graphs and so on. In one embodiment, configuring the digital twin of the machine tool comprises updating the digital twin of the machine tool based on the condition data and the computed parameter value. The digital twin of the machine tool is updated to replicate, through simulations, a response substantially similar to a response of the machine tool in real-time. In other words, the digital twin is configured to represent a state of the machine tool in real-time.

Advantageously, the digital twin acts as a soft-sensor that facilitates replicating responses of internal components of the machine tool, that are not measurable using physical sensors.

The method further comprises simulating a behavior of the one or more critical components based on the configured digital twin in a simulation environment. In accordance with an embodiment of the present invention, simulating the behavior of the one or more critical components comprises generating a simulation instance based on the configured digital twin. The simulation instance may be a thread of simulation, associated with the simulation model, independent of all other threads during execution. Further, the simulation instance is executed in a simulation environment using a simulation model for generating simulation results indicative of a behavior of the one or more critical components. The simulation model may be an analytical model in machine-executable form derived from at least one of a physics-based model, a data-driven model or a hybrid model associated with the machine tool. The simulation model may be a 1-dimensional(1D) model, a 2-dimensional(2D) model, a 3-dimensional(3D) model or a combination thereof. The simulation instance may be executed in the simulation environment as one of stochastic simulations, deterministic simulations, dynamic simulations, continuous simulations, discrete simulations, local simulations, distributed simulations, co-simulations or a combination thereof. It must be understood that the simulation models referred to in the present disclosure may include both system-level models and component-level models associated with the machine tool. In an embodiment, the behavior of the one or more critical components is associated with a stability of the machine tool. The stability may be associated with chatter, cutting tool, axis or spindle of the machine tool or an overall structural stability of the machine tool. In another embodiment, the behavior of the one or more critical components is associated with one or more defects in the one or more critical components. The defects in a component are a result of one or more failure modes. The defects include, but are not limited to, lank wear, notch wear, crater wear, plastic deformation, thermal cracking, chipping and fatigue fracture.

Advantageously, the present invention facilitates determining different types of stability as well as defects associated with machine tool through simulations based on the digital twin. As the digital twin replicates a real-time behavior of the machine tool, results of the simulation are more accurate compared to conventional techniques of analysis based on sensor data alone.

The method further comprises predicting an impact on the performance of the machine tool based on the behavior of the one or more critical components in the simulation environment. In one embodiment, predicting the impact on the performance of the machine tool comprises determining a cycle time associated with the machine tool based on the stability of the machine tool. The term 'cycle time' as used herein refers to time taken by the machine tool to complete a production run. In other words, the term 'cycle time' may be defined as a time taken by the machine tool to complete a cutting operation. In another embodiment, predicting the impact on the performance of the machine tool comprises predicting the impact on accuracy of machining associated with the machine tool based on the stability of the machine tool. The accuracy of machining indicates a difference between an actual measurement specified by the operator for a workpiece and a measurement of a finished workpiece. The actual measurement may be specified in a CAD file provided to the machine tool. In yet another embodiment, predicting the impact on the performance of the machine tool comprises computing a remaining useful life of the one or more critical components based on the one or more defects.

Advantageously, the present invention facilitates predicting an impact on performance of the machine tool based on real-time condition data.

The method further comprises optimizing an operation of the machine tool based on the impact on the performance of the machine tool. In one embodiment, optimizing the operation of the machine tool comprises identifying at least one control parameter for improving the performance of the machine tool based on the impact. The control parameters include, but are not limited to, cutting speed, feed rate and depth of cut. Further, a value of the control parameter is computed based on the impact on the performance of the machine tool. Further, an operation of the machine tool is simulated based on the computed value of the control parameter. Further, a simulated performance of the machine tool from the simulated operation is compared to a threshold value. If the simulated performance of the machine tool is greater than the threshold value, the computed value of the control parameter is applied to operate the machine tool.

Advantageously, the present invention facilitates optimizing operation of a machine tool during run-time, based on the real-time condition parameters, for improving the performance.

In accordance with an embodiment of the present invention, the method further comprises generating one or more recommendations for improving a design of the one or more critical components based impact on the performance of the machine tool. In an example, the design may be improved by modifying a stiffness associated with a material of the one or more critical components of the machine tool. The one or more critical components may include, for example, bed, column, axis or spindle associated with the machine tool. In an embodiment, the recommendations may be generated based on knowledge graphs.

In accordance with an embodiment of the present invention, the method further comprises scheduling a maintenance activity for the machine tool based on the impact on the performance. The maintenance activity may be associated with preventive maintenance, a reactive maintenance or predictive maintenance.

The object of the present invention is achieved by an apparatus for instantaneous performance management of a machine tool. The apparatus comprises one or more processing units, and a memory unit communicatively coupled to the one or more processing units. The memory unit comprises a condition management module stored in the form of machine-readable instructions executable by the one or more processing units. The condition management module is configured to perform method steps described above. The execution of the condition management module may also be performed using co-processors such as Graphical Processing Unit (GPU), Field Programmable Gate Array (FPGA) or Neural Processing/Compute Engines. In addition, the memory unit may also include a database.

According to an embodiment of the present invention, the apparatus can be an edge computing device. As used herein "edge computing" refers to computing environment that is capable of being performed on an edge device (e.g., connected to sensing units in an industrial setup and one end and to a remote server(s) such as for computing server(s) or cloud computing server(s) on other end), which may be a compact computing device that has a small form factor and resource constraints in terms of computing power. A network of the edge computing devices can also be used to implement the apparatus. Such a network of edge computing devices is referred to as a fog network.

In another embodiment, the apparatus is a cloud computing system having a cloud computing based platform configured to provide a cloud service for analyzing condition data of a machine tool. As used herein, "cloud computing" refers to a processing environment comprising configurable computing physical and logical resources, for example, networks, servers, storage, applications, services, etc., and data distributed over the network, for example, the internet. The cloud computing platform may be implemented as a service for analyzing condition data. In other words, the cloud computing system provides on-demand network access to a shared pool of the configurable computing physical and logical resources. The network is, for example, a wired network, a wireless network, a communication network, or a network formed from any combination of these networks.

Additionally, the object of the present invention is achieved by a system for instantaneous performance management of a machine tool. The system comprises one or more sources capable of providing real-time condition data associated with a machine tool and an apparatus configured for instantaneous performance management of the machine tool as described above, communicatively coupled to the one or more sources. The term 'sources' as used herein, refer to electronic devices configured to obtain and transmit the condition data to the apparatus. Non-limiting examples of sources include sensing units, controllers and edge devices.

The object of the present invention is also achieved by a computer program product. The computer-program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The above-mentioned attributes, features, and advantages of this invention and the manner of achieving them, will become more apparent and understandable (clear) with the following description of embodiments of the invention in conjunction with the corresponding drawings. The illustrated embodiments are intended to illustrate, but not limit the invention.

The present invention is further described hereinafter with reference to illustrated embodiments shown in the accompanying drawings, in which:

FIG 1A    illustrates a block-diagram of a system for instantaneous performance management of a machine tool, in accordance with an embodiment of the present invention;

FIG 1B    illustrates a block-diagram of an apparatus for instantaneous performance management of a machine tool, in accordance with an embodiment of the present invention;

FIG 2    illustrates a block diagram of a test set-up for building a digital twin of a machine tool, in accordance with an embodiment of the present invention;

FIG 3    depicts a flowchart of an exemplary method for instantaneous performance management of a machine tool, in accordance with an embodiment of the present invention; and

FIG 4    depicts a flowchart of an exemplary method for optimizing an operation of a machine tool, in accordance with an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

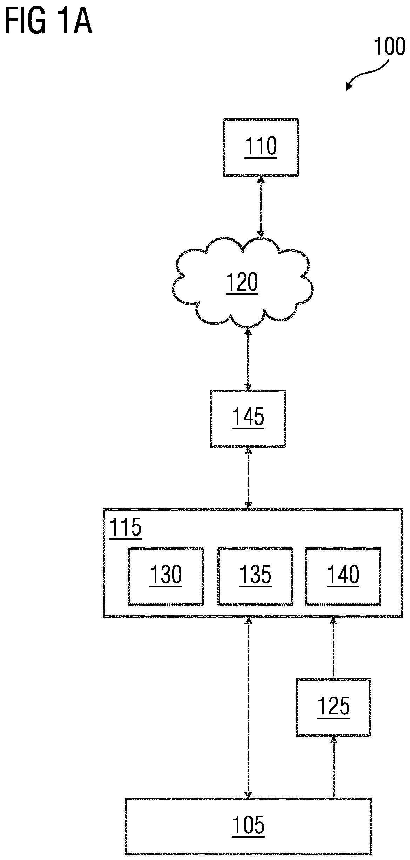

FIG 1A illustrates a block-diagram of a system 100 for instantaneous performance management of a machine tool 105, in accordance with an embodiment of the present invention. The system 100 comprises an apparatus 110 communicatively coupled to a controller 115 associated with the machine tool 105, through a network 120. The apparatus 110 is an edge computing device. It must be understood by a person skilled in the art the apparatus 110 may be communicatively coupled to a plurality of controllers, in a similar manner. Each controller may be associated with one or more machine tools. The controller 115 may enable an operator of the machine tool 105 to define operating conditions for performing a machining operation. As may be understood by a person skilled in the art, the operating conditions may be defined by an operator before starting a machining operation or during operation of the machine tool 105. For example, the operating conditions correspond to type of machining operation, type of cutting tool, tool settings, Automatic Tool Changer settings, feed rate, cutting speed, G-codes, M-codes and material testing data associated with a workpiece mounted on the machine tool 105. The controller 115 may be further communicatively coupled to one or more sensing units 125 associated with the machine tool 105. The one or more sensing units include at least one of a position sensor, accelerometer, rotary encoder, dynamometer, current sensor, thermistor, acoustic sensor and image sensor. The position sensor is configured for determining a linear position of the workpiece mounted on the machine tool 105. The accelerometer is configured for measuring vibrations at one or more locations on the machine tool 105. In the present embodiment, the accelerometer is installed on a structure of the machine tool 105. For example, the accelerometer may be attached to a bed or column of the machine tool 105. The rotary encoder is configured for measuring number of rotations of a spindle on the machine tool 105. The dynamometer is configured for measuring a cutting force associated with a cutting tool on the machine tool 105. The current sensor is configured for measuring current associated with a servo mechanism that controls motion of the spindle of the machine tool 105. The thermistor is configured for measuring temperature at one or more locations on the machine tool 105. The acoustic sensor is configured for measuring a noise level generated by the machine tool 105. The image sensor is configured to capture images of the cutting tool for determining tool wear.

The controller 115 comprises a trans-receiver 130, one or more processors 135 and a memory 140. The trans-receiver 130 is configured to connect the controller 115 to a network interface 145 associated with the network 120. The controller 115 transmits real-time condition data to the apparatus 110 in through the network interface 145. The real-time condition data includes the operating conditions set on the controller 115 and sensor data received from the one or more sensing units 125.

The apparatus 110 may be a (personal) computer, a workstation, a virtual machine running on host hardware, a microcontroller, or an integrated circuit. As an alternative, the apparatus 110 may be a real or a virtual group of computers (the technical term for a real group of computers is "cluster", the technical term for a virtual group of computers is "cloud").

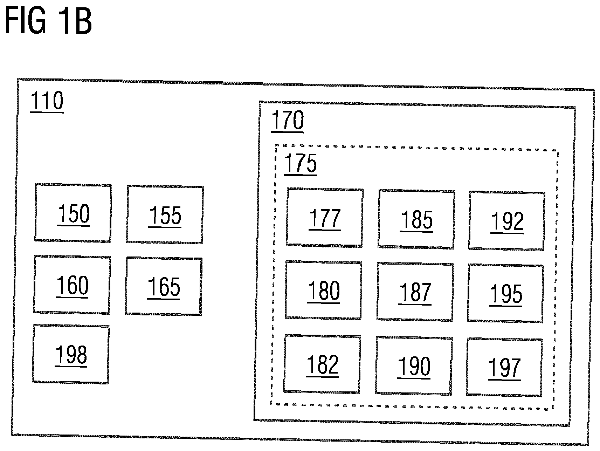

The apparatus 110 includes a communication unit 150, one or more processing units 155, a display 160, a Graphical User Interface (GUI) 165 and a memory unit 170 communicatively coupled to each other as shown in FIG 1B. In one embodiment, the communication unit 150 includes a transmitter (not shown), a receiver (not shown) and Gigabit Ethernet port (not shown). The memory unit 170 may include 2 Giga byte Random Access Memory (RAM) Package on Package (PoP) stacked and Flash Storage. The one or more processing units 155 are configured to execute the defined computer program instructions in the modules. Further, the one or more processing units 155 are also configured to execute the instructions in the memory unit 170 simultaneously. The display 160 includes a High-Definition Multimedia Interface (HDMI) display and a cooling fan (not shown). Additionally, control personnel may access the apparatus 110 through the GUI 165. The GUI 165 may include a web-based interface, a web-based downloadable application interface, and so on.

The processing unit 155, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 155 may also include embedded controllers, such as generic or programmable logic devices or arrays, application specific integrated circuits, single-chip computers, and the like. In general, a processing unit 155 may comprise hardware elements and software elements. The processing unit 155 can be configured for multi-threading, i.e. the processing unit 155 may host different calculation processes at the same time, executing the either in parallel or switching between active and passive calculation processes.

The memory unit 170 may be volatile memory and non-volatile memory. The memory unit 170 may be coupled for communication with the processing unit 155. The processing unit 155 may execute instructions and/or code stored in the memory unit 170. A variety of computer-readable storage media may be stored in and accessed from the memory unit 170. The memory unit 170 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

The memory unit 170 further comprises a condition management module 175 in the form of machine-readable instructions on any of the above-mentioned storage media and may be in communication to and executed by the processing unit 155. The condition management module 175 further comprises a preprocessing module 177, a parameter computation module 180, a digital twin module 182, a simulation module 185, an analytics module 187, an optimization module 190, a recommendation module 192, a maintenance module 195 and a notification module 197. The apparatus 110 may further comprise a storage unit 198. The storage unit 198 may include a database comprising operational or performance logs associated with all the machine tools communicatively coupled to the apparatus 110. The following description explains functions of the modules when executed by the processing unit 155.

The preprocessing module 177 is configured for preprocessing of real-time condition data received from the controller 115. The preprocessing of the operational data may comprise different steps for preparing the condition data for further processing. The different steps in preprocessing may include, but not limited to, data cleaning, data normalisation, data selection and so on.

The parameter computation module 180 is configured for computing at least one parameter value associated with one or more critical components which is likely to affect a performance of the machine tool 105 based on the condition data.

The digital twin module 182 configures a digital twin of the machine tool 105 based on the parameter value. The digital twin module 182 continuously calibrates the digital twin of the machine tool 105 to replicate substantially similar responses of the machine tool 105 in real-time, upon simulation. In other words, the digital twin is calibrated to ensure a certain degree of fidelity with the machine tool 105.

The simulation module 185 is configured for simulating a behavior of the one or more critical components based on the configured digital twin in a simulation environment.

The analytics module 187 is configured for predicting an impact on the performance of the machine tool 105 based on the behavior of the one or more critical components in the simulation environment.

The optimization module 190 is configured for optimizing an operation of the machine tool 105 based on the impact on the performance of the machine tool 105.

The recommendation module 192 is configured for generating one or more recommendations for improving a design of the one or more critical components based impact on the performance of the machine tool 105.

The maintenance module 195 is configured for determining a maintenance activity to be performed on the machine tool 105 based on the performance. The maintenance module 195 is further configured for scheduling the maintenance activity based on the impact on the performance.

The notification module 197 is configured for generating notifications indicating optimised control parameters and improvement in performance resulting from the optimised parameters based on the output from the optimisation module. Further, the notification is also configured for generating notifications indicating recommendations generated by the recommendation module 192. Furthermore, the recommendation module 192 is configured for generating notifications indicating scheduled maintenance activities for the machine tool 105, as well as periodic reminders for the maintenance activities.

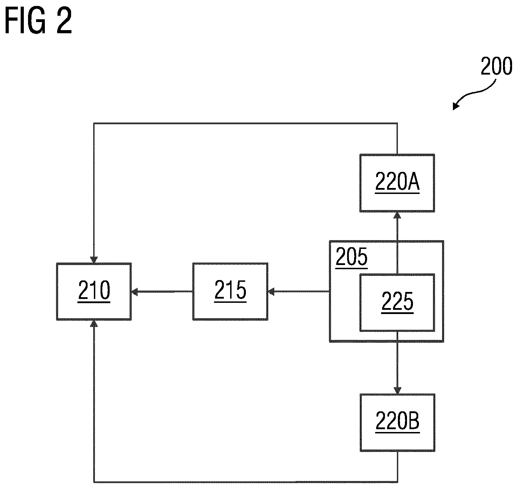

FIG 2 illustrates a block diagram of a test set-up 200 for building a digital twin of a machine tool 205, in accordance with an embodiment of the present invention. In the present embodiment, the machine tool 205 is a CNC lathe. The CNC lathe is a three-axis machine comprising a spindle attached to a tool holder. The tool holder holds cutting tools required for machining a workpiece. Similarly, positioning of the workpiece with respect to the cutting tool along an axis is enabled by a ball screw and a linear motion (LM) guide.

The test-set up 200 comprises an apparatus 210 (similar to apparatus 110) communicatively coupled to a controller 215 of the machine tool 205. The controller 215 is configured to provide real-time condition data to the apparatus 210 as explained earlier using FIG 1A. The apparatus 210 is further communicatively coupled to at least one first sensing unit 220A and at least one second sensing unit 220B. In one embodiment, the first sensing unit 220A and the second sensing unit 220B may be communicatively coupled to the apparatus 210 through the controller 215.

The first sensing unit 220A includes vibration sensors configured to measure vibrations associated with at least one component 225 on a structure of the machine tool 205. The at least one component 225 may be for example, a bed or a column associated with the machine tool 205. It must be understood by a person skilled in the art that the axis motor is not limited to external servomotors used along with ball screws, but may also include other types of motors such as linear motors for machine tools that do not employ ball screws. The vibration sensors may include, but are not limited to, capacitive sensors, piezoelectric sensors and accelerometers. For example, the first sensing unit 220A may include accelerometers attached to at least one of the at least one component 225. The second sensing unit 220B includes temperature sensors configured to measure temperature associated with the at least one component 225 of the CNC lathe. The temperature sensors may include contact-type sensors such as thermocouples and thermistors, as well as non-contact-type sensors such as infrared sensors. For example, the second sensing unit 220B may include thermocouples attached to the at least one component 225. The first sensing unit 220A and the second sensing unit 220B are configured to provide the measured values of vibration and temperatures respectively to the controller 215 in real-time.

The digital twin may be based on metadata associated with the machine tool 205, historical data associated with the machine tool 205 and a model of the machine tool 205. The metadata may include specifications provided by an OEM of the machine tool 205 that determine a type and maximum capacity of the machine tool 205. Non-limiting examples of specifications for a CNC lathe include dimensions, height of centers, center distance, swing over bed, slide travel, spindle bore, spindle nose, taper in nose, metric thread pitches, power and torque of spindle, power of axes and motor ratings. The metadata further comprises physical and mechanical properties associated with different components of the CNC lathe. Non-limiting examples of such properties include dimensions, conductivity, elasticity, density, coefficient of expansion, yield strength, tensile strength, fatigue strength, shear strength and toughness. The historical data may comprise historic information related to performance, maintenance and health condition of the machine tool 205. The model of the machine tool 205 is a hybrid model based on at least one machine-learning model and at least one physics-based model associated with the machine tool 205. The hybrid model correlates real-time condition data from the controller 215 to a state of the machine tool 205 in real-time based on the metadata and the historic data. In other words, the outputs of the at least one machine learning model and the at least one physics-based model at any given instance indicate the state of the machine tool 205 in real-time. In the present embodiment, the hybrid model of the machine tool 205 comprises at one or more machine learning models and one or more physics-based models. The one or more machine learning models include a first machine learning model and a second machine learning model. The first machine learning model and the second machine learning model are trained using simulation data generated by a dynamic simulation model and a thermal simulation model respectively.

The dynamic simulation model comprises a plurality of simulation models interconnected to model a dynamic nature of the machine tool 205. In the present embodiment, the dynamic simulation model comprises 3D simulation models and 1D simulation models. The 3D simulation models are used for modelling contact physics between components of the machine tool 205, whereas 1D simulation models are used for modelling the components of the machine tool 205. The 1D simulation models comprise at least one of mass-spring-damper models and lumped mass models corresponding to the components of the machine tool 205. The dynamic simulation model is further configured based on the condition data from the controller 215.

The configured dynamic simulation model is executed through co-simulation in a suitable simulation environment, in order to generate simulated values corresponding to vibration in the at least one component 225 of the machine tool 205. For example, the simulated values are generated as vibration profiles corresponding to the at least one component 225 for a predefined interval of time. Similarly, simulated values of vibration are generated for different operating conditions of the machine tool 205. The simulated values corresponding to vibration is further used to train the first machine learning model, using a supervised learning algorithm, to predict vibration values based on the condition data. However, it must be understood that the first machine learning model may be trained using other techniques including but not limited to, unsupervised learning algorithms, deep learning algorithms and reinforcement learning.

The trained first machine learning model is further calibrated based on actual vibration values measured by the first sensing unit 220A attached to the at least one component 225. If the simulated vibration values deviate from the actual vibration values of the machine tool 205, the first machine learning model is retrained until vibration values predicted by the first machine learning model replicates the vibration values measured by the first sensing unit 220A. The vibration values correspond to dynamic responses of the machine tool 205. Based on the vibration values, a vibration spectrum may be generated using, for example, Fast Fourier Transform (FFT). In other words, the first machine learning model is tuned to replicate substantially similar dynamic responses as the machine tool 205 for any given operating condition.

Similarly, the thermal simulation model is built using Finite-Element simulation models associated with the machine tool 205. Further, the thermal simulation model is configured based on the real-time condition data. The configured thermal simulation model is executed in a suitable simulation environment, to generate simulated values corresponding to temperature values associated with the at least one component 225. For example, the simulated values are generated as thermal profiles corresponding to the at least one component 225 in a predefined interval of time. Similarly, simulated values of temperature are generated for different operating conditions. The simulated values of temperature are further used to train a second machine learning model, using a supervised learning algorithm, for predicting temperature in the at least one component 225 based on the condition data from the controller 215. The second machine learning model is further calibrated based on actual temperature values received from the second sensing unit 220B attached to the at least one component 225. In other words, the second machine learning model is tuned to replicate thermal responses of the at least one component 225 based on any given operating condition.

In addition to the above, the one or more machine learning models comprise a third machine learning model trained to determine one or more defects in the at least one component 225. The defects include, but are not limited to, lank wear, notch wear, crater wear, plastic deformation, thermal cracking, chipping and fatigue fracture. The third machine learning model is trained by artificially introducing each of the defects on the at least one component 225. Further, vibration spectrums corresponding to each of the defects is generated based on outputs from the first machine learning model. Further, one or more features indicative of a degradation associated with the machine tool 205 is extracted from the vibration spectrum using at least one data analysis technique. The features may be further used to compute degradation index that represents a level of degradation associated with the at least one component 225. In an embodiment, spectral kurtosis associated with the vibration spectrum may be measured. Based on the spectral kurtosis, noise may be filtered out from the vibration spectrum using a suitable bandpass filter. Further, harmonics present in the vibration spectrum may be analysed to detect presence of defective frequencies, that is frequencies that indicate a specific defect. Further, peaks corresponding to the defective frequencies are analysed to determine a state of degradation due to the defect. For example, an increase in the amplitude of the peaks may indicate that the degradation is progressing. Similarly, the vibration spectrum may be subjected to a wavelength transformation function in order to detect presence of non-stationary shock pulses resulting from a defect. For example, the wavelength transformation function may include one of discrete wavelength transformation and continuous wavelength transformation. Alternatively or in addition to the above, for certain defects, the degradation index may be indicated by features such as spectral energy, Root-Mean-Square (RMS) velocity, envelope RMS velocity, crest factor, modified crest factor or a combination thereof associated with the vibration spectrum. Further, the third machine learning model is trained based on extracted features corresponding to each of the defects. In one example, the third machine learning model may be trained based on a supervised learning algorithm such as k-NN algorithm. Upon training, the third machine learning model may predict defects in the machine tool 205 based on the features of the vibration spectrum associated with the at least one component 225.

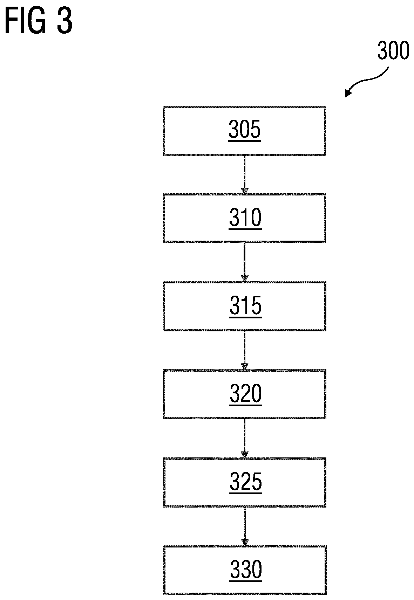

FIG 3 depicts a flowchart of an exemplary method 300 for instantaneous performance management of a machine tool, in accordance with an embodiment of the present invention.

At step 305, real-time condition data associated the machine tool is receiving from one or more sources. For example, the real-time condition data corresponds to operating conditions of the machine tool as received from a controller of the machine tool in real-time. The condition data may correspond to, for example, type of machining operation, type of cutting tool, sensor data, feed rate, cutting speed, spindle power, axis torques, axis speeds, spindle speed, number of strokes per minute for each axis and range of the strokes. Here, the sensor data includes time-series data corresponding to vibration and temperature, received from sensing units associated with the machine tool in real-time. In addition, the condition data also includes specifications associated with the machine tool and material testing data associated with the workpiece. Based on the specifications and control parameters such as cutting speed, feed rate and depth of cut, a maximum performance of the machine tool is computed. For example, the maximum performance indicates an ideal cycle time required for completion of machining on the workpiece. In another example, the maximum performance an accuracy of machining.

At step 310, at least one parameter value which is likely to affect the performance of the machine tool is computed based on the condition data. In the present embodiment, the at least one parameter value corresponds to dynamic stiffness associated with one or more critical components of the machine tool. The one or more critical components are selected such that behavior of these components affect a performance of the machine tool. In a preferred embodiment, the one or more critical components include the spindle, the LM guide, the ball screw and the cutting tool. However, it must be understood that the one or more critical components may further include other components, including but not limited to, bearings, couplers, motors associated with the axis and spindle. In another embodiment, the at least one parameter value includes both static stiffness and dynamic stiffness. More specifically, physics-based models are used to calculate stiffness values for the one or more critical components based on the operating conditions and the specifications.

Here, it must be understood by a person skilled in the art, that the sensor data present within the real-time condition data is an indication of variations in the stiffness values. In general, the stiffness value deteriorates with increasing temperature. Similarly, increased vibrations indicate increased displacement of a component. The increased displacement is yet another indicator of a decreased stiffness value. Consequently, variations in the stiffness value impacts the accuracy of machining.

The physics-based models may include one or more of mathematical models, reduced order models or Finite Element (FE) models corresponding to the one or more critical components. In an embodiment, the physics-based models are firstly configured based on the real-time condition data from the controller 115. Further, the stiffness values of the one or more critical components are determined through Finite Element Analysis (FEA) simulations employing the configured physics-based models. For example, the results of the FEA simulation may indicate stiffness values associated with each of the components. Similarly, the stiffness values are computed over predefined intervals of time, for example, every one second. In another embodiment, the dynamic stiffness may be computed from sensor data generated by the one or more sensing units, using predefined mathematical models.

At step 315, a digital twin of the machine tool is configured based on the parameter value. In the present embodiment, the digital twin is configured by updating based on the condition data and the stiffness value. More specifically, the metadata of the digital twin is updated based on the specifications, and the hybrid model is updated based on the condition data. The configured digital twin represents a state of the machine tool in real-time.

At step 320, a behavior of the component is simulated based on the configured digital twin in a simulation environment. For example, the behavior may be associated with a stability of the machine tool. In order to simulate the behaviour, at first, a simulation instance is generated based on the configured digital twin. The simulation instance represents a machine-readable state of the machine tool corresponding to the configured digital twin. Similarly, multiple simulation instances may be generated corresponding to a plurality of operating conditions. In the present example, the plurality of operating conditions may correspond to condition data at different instances of time. Further, the simulation instance is executed in a simulation environment using a simulation model. Here, the simulation model correlates a state of the machine to a performance of the machine. In the present embodiment, the performance of the machine is measured based on the cycle time. The simulation environment may be provided by different computer-aided simulation tools. In the present embodiment, the simulation instances are executed through co-simulations of the 1D simulation model and the 3D simulation model. Upon execution, simulation results are generated corresponding to each of the simulation instances. The simulation results indicate the performance of the machine tool corresponding to each of the simulation instances.

At step 325, an impact on the performance of the machine tool is predicted based on the behavior of the component in the simulation environment. In an embodiment, the impact on the performance of the machine tool is determined based on simulation results generated. For example, the simulation results may include a harmonic spectrum. The harmonic spectrum may indicate presence of harmonics at a cutting pass frequency associated with the cutting tool. The cutting pass frequency is defined as the frequency at which a tooth of the cutting tool passes a specific point during rotation. The cutting pass frequency is determined based on an angular velocity of the cutting tool determined through the simulation and number of teeth on the cutting tool. Further, harmonics may be analysed further to determine features indicative of a stability index. The stability index may be defined as a numerical value that indicates a level of stability of the machine tool. For example, the stability index may be computed based on an amplitude of the harmonics. In another example, the simulation results may include vibration waveforms associated with the one or more critical components in time-series. The vibration waveforms are analysed to determine a feature indicative of the stability index. The features may include, but are not limited to, spectral energy, spectral kurtosis, Root-Mean-Square (RMS) velocity, envelope RMS velocity, crest factor and modified crest factor. The features may be correlated to the stability index using predictive modelling. The stability index may be further correlated to an accuracy of the machine tool using predefined mathematical relations. In another example, the impact may be predicted as for example, a cycle time corresponding to different spindle speeds. In general, a lower stability index may result in higher cycle time and higher stability index may result in lower cycle time.

In another embodiment, at least one feature of the harmonic spectrum or the vibration waveform may be used to identify defects in the one or more components. Further, the feature may be correlated to a degradation index based on predictive modelling. The degradation index may be correlated to a remaining useful life of the machine tool. In an embodiment, simulation assisted Failure Mode and Effects Analysis (FMEA) may be performed in order to determine the remaining useful of the one or more critical components based on the one or more defects. Based on the RUL, a failure time of the machine tool is determined. For example, the failure time is equal to the shortest value of RUL among the RULs of the one or more critical components.

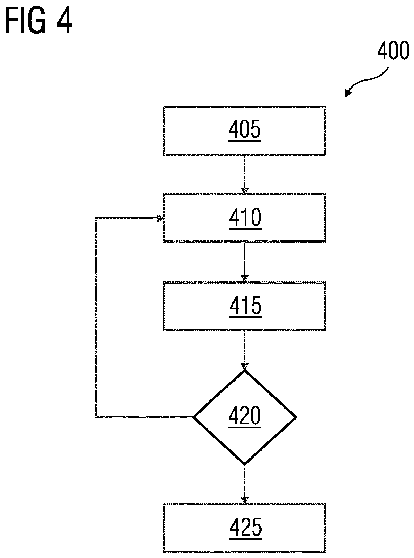

At step 330, an operation of the machine tool is optimized based on the impact on the performance of the machine tool as explained below with reference to FIG 4.

FIG 4 depicts a flowchart of an exemplary method 400 for optimizing an operation of a machine tool, in accordance with an embodiment of the present invention.

At step 405, at least one control parameter for improving a performance of the machine tool is identified based on a predicted impact on performance of the machine tool. The control parameter may include one or more of a cutting speed, a feed rate and depth of cut.

At step 410, a value of the control parameter is computed based on the predicted impact on the performance of the machine tool. In one embodiment, the value of the control parameter is computed using an optimization algorithm. In an embodiment, the optimization algorithm is a multivariable optimization algorithm that optimizes multiple control parameters for minimising the impact on the performance.

At step 415, an operation of the machine tool is simulated based on the computed value of the control parameter.

For example, the operation of the machine tool may be simulated by generating simulation instances based on the computed values of the control parameter.

At step 420, a simulated performance of the machine tool from the simulated operation is compared to a threshold value. The threshold value may be predefined by the operator of the machine tool. For example, the operator may specify that the cycle time may not exceed 10 minutes. If the simulated performance is lesser than the threshold value, step 410 is repeated in order to fine tune the control parameters. Otherwise, step 425 is performed.

At step 425, the computed value of the control parameter is applied to operate the machine tool. More specifically, the computed values of the control parameters are set on the controller of the machine tool.

In one embodiment, the apparatus 110 may generate recommendations for improving a design of the one or more critical components based on the impact on the performance of the machine tool. In one embodiment, the recommendations may be generated based on information stored in a knowledge graph. The knowledge graph may be built by an OEM based on, for example, configuration or replacement history of a plurality of machine tools. The knowledge graph may be maintained on the apparatus 110 or on a different system (not shown) associated with the OEM communicatively coupled to the apparatus 110. The knowledge graph may be queried using a graphy query language. The query may be based on keywords corresponding to the impact on the performance of the machine tool, the defect, a part number of the defective component etc. Based on the query, one or more responses are returned from the knowledge graph. The one or more responses correspond to recommendations for improving the design of the one or more critical components. For example, if spindle of a specific part number is identified to be frequently defective, the recommendation may be associated with replacing the spindle with another spindle of different part number.

In another embodiment, maintenance activities for the machine tool may be scheduled based on the impact on the performance of the machine tool. The maintenance activity may be scheduled based on analysis of the performance of the machine tool and also based on preferences predefined by an operator of the machine tool. For example, if the performance of the machine tool is degrading frequently, a maintenance activity may be scheduled. The frequency of degradation may be determined based on a number of times an operation of the machine tool is optimised. The maintenance activity may be scheduled, for example, after five instances of degraded performance. Further, the schedule for the maintenance activity may be notified to the operator, for example, on a Human Machine Interface (HMI) associated with the machine tool. Further, periodic warning messages may be shown on the HMI in order to perform the maintenance activity.

In one embodiment, machining activities are planned based on the performance of the machine tool. For example, an operator may assign a plurality of machine tools for machining a workpiece. For example, a first machine tool may be a CNC milling machine, a second machine tool may be a CNC grinding machine and so on. Upon assigning the machine tools, the operator may specify control parameters such as cutting speed, feed rate and depth of cut for the machining operations on each of the machine tools. In addition, the operator may also specify a cycle time for completion of the machining operation. Based on the control parameters specified by the operator and historic values of sensor data associated with the machine tool, a stiffness value associated with the one or more critical components of the machine tool is predicted. In an example, the digital twin of the machine tool may be configured based on the control parameters provided by the operator and the historic values of sensor data. For example, sensor data from the most recent operation of the machine tool may be considered for the historic values. Further, based on the stiffness value, a behaviour of the machine tool is simulated. The results from the simulation may be further used to determine whether the simulated performance of the machine tool meets the cycle time specified. If the simulated performance indicates a cycle time lower than the specified cycle time, then the notification may include the cycle time associated with the simulated performance. Otherwise, if the simulated performance indicates a cycle time greater than the specified cycle time, a notification may be generated. For example, the notification may include a message such as *'The machine tool is unable to meet the specified cycle time'*. In addition to the above, the machine tool may also generate one or more recommendations for achieving the specified cycle time.

Advantageously, the present invention helps in calculation of an Overall Equipment Effectiveness (OEE) associated with the machine tool for each job. The OEE is calculated using the following equation:

$$\mathrm{OEE} = \mathrm{P*Q*A} \qquad\qquad (1)$$

where, P is performance in percentage, Q is quality in percentage and A is availability of the machine tool in percentage. In the above equation, P is computed using the present invention. Q is obtained from the operator based on quality of finished workpieces. For example, if 9 out of a total 10 finished workpieces meet an accuracy level specified by the machines, the quality is 90%. A is determined based on, for example, Mean Time Between Failures (MTBF) and Mean Time To Repair (MTTR) associated with the machine tool. Specifically,

$$A = 100*MTBF/(MTTR+MBTF) \qquad (2)$$

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of system, and is not limited to any particular distributed architecture, network, or communication protocol.

While the invention has been illustrated and described in detail with the help of a preferred embodiment, the invention is not limited to the disclosed examples. Other variations can be deducted by those skilled in the art without leaving the scope of protection of the claimed invention.

LIST OF REFERENCE NUMERALS

| | |
|---|---|
| 100 | system for real-time condition monitoring of a machine tool |
| 105 | machine tool |
| 110 | apparatus |
| 115 | controller |
| 120 | network |
| 125 | one or more sensing units |
| 130 | trans-receiver |
| 135 | one or more processors of the controller |
| 140 | memory of the controller |
| 145 | network interface |
| 150 | communication unit |
| 155 | one or more processing units of the apparatus, |
| 160 | display |
| 165 | Graphical User Interface (GUI) 165 |
| 170 | memory unit of the apparatus |
| 175 | condition management module |
| 177 | preprocessing module |
| 180 | parameter computation module |
| 182 | digital twin module |
| 185 | simulation module |
| 187 | analytics module |
| 190 | optimization module |
| 192 | recommendation module |
| 195 | maintenance module |
| 197 | notification module |
| 198 | storage unit |
| 200 | test-set up for building a digital twin of a machine tool |
| 205 | machine tool |
| 210 | apparatus |
| 215 | controller |
| 220A | first sensing unit |
| 220B | second sensing unit |
| 225 | at least one component of the machine tool |

**Claims**

**1.** A computer-implemented method for instantaneous performance management of a machine tool (105), the method comprising:

receiving, by a processing unit (155), real-time condition data associated with one or more components (225) of the machine tool (105) from one or more sources (115), wherein the condition data is indicative of one or more operating conditions of the machine tool (105) in real-time;
computing at least one parameter value associated with one or more critical components which is likely to affect a performance of the machine tool (105) based on the condition data;
configuring a digital twin of the machine tool (105) based on the parameter value;
simulating a behavior of the one or more critical components based on the configured digital twin in a simulation environment;
predicting an impact on the performance of the machine tool (105) based on the behavior of the one or more critical components in the simulation environment; and
optimizing an operation of the machine tool (105) based on the impact on the performance of the machine tool (105) .

2. The method according to claim 1, wherein computing the at least one parameter value associated with the one or more critical components which is likely to affect a performance of the machine tool (105) comprises:
computing a stiffness value associated with the one or more critical components based on the condition data.

3. The method according to claim 1, wherein configuring the digital twin of the machine tool (105) based on the parameter value comprises:
updating the digital twin of the machine tool (105) based on the condition data and the computed parameter value.

4. The method according to claim 1, wherein simulating the behavior of the one or more critical components based on the configured digital twin in the simulation environment comprises:

generating a simulation instance based on the configured digital twin; and
executing the simulation instance in a simulation environment using a simulation model for generating simulation results indicative of a behavior of the one or more critical components.

5. The method according to claims 1 and 4, wherein the behavior of the one or more critical components is associated with a stability of the machine tool (105).

6. The method according to claims 1, 4 and 5, wherein predicting the impact on the performance of the machine tool (105) based on the behavior of the one or more critical components comprises:
predicting the impact on a cycle time associated with the machine tool (105) based on the stability of the machine tool (105).

7. The method according to claims 1, 4 and 5, wherein predicting the impact on the performance of the machine tool (105) based on the behavior of the one or more critical components comprises:
predicting the impact on accuracy of machining associated with the machine tool (105) based on the stability of the machine tool (105).

8. The method according to claims 1 and 4, wherein the behavior of the one or more critical components is associated with one or more defects in the one or more critical components.

9. The method according to claim 1, 4 and 8, wherein predicting the impact on the performance of the machine tool (105) based on the behavior of the one or more critical components comprises:
computing a remaining useful life of the one or more critical components based on the one or more defects.

10. The method according to claim 1, wherein optimizing the operation of the machine tool (105) based on the impact on the performance of the machine tool (105) comprises:

identifying at least one control parameter for improving the performance of the machine tool (105) based on the impact;
computing a value of the control parameter based on the impact on the performance of the machine tool (105);
simulating an operation of the machine tool (105) based on the computed value of the control parameter;
comparing a simulated performance of the machine tool (105) from the simulated operation to a threshold value;

and

if the simulated performance of the machine tool (105) is greater than the threshold value, applying the computed value of the control parameter to operate the machine tool (105).

11. The method according to claim 1, further comprising:
generating one or more recommendations for improving a design of the one or more critical components based impact on the performance of the machine tool (105).

12. The method according to claim 1, further comprising:
scheduling a maintenance activity for the machine tool (105) based on the impact on the performance.

13. An apparatus (110) for instantaneous performance management of a machine tool (105), the apparatus (110) comprising:

one or more processing units (155); and
a memory unit (170) communicatively coupled to the one or more processing units (155), wherein the memory unit (170) comprises a condition management module (175) stored in the form of machine-readable instructions executable by the one or more processing units (155), wherein the condition management module (175) is configured to perform method steps according to any of the claims 1 to 12.

14. A system (100) for instantaneous performance management of a machine tool (105), the system (100) comprising:

one or more sources (115) configured for providing real-time condition data associated with the machine tool (105); and
an apparatus (110) according to claim 13, communicatively coupled to the one or more sources (115), wherein the apparatus (110) is configured for instantaneous performance management of the machine tool (105) based on the real-time condition data, according to any of the method claims 1 to 12.

15. A computer-program product having machine-readable instructions stored therein, which when executed by one or more processing units (155), cause the processing units (155) to perform a method according to any of the claims 1 to 12.

# FIG 1A

100

# FIG 1B

110

170

175

| | | |
|---|---|---|
| 150 | 155 | |
| 160 | 165 | |
| 198 | | |

| | | |
|---|---|---|
| 177 | 185 | 192 |
| 180 | 187 | 195 |
| 182 | 190 | 197 |

# FIG 2

200

FIG 3

300

305

310

315

320

325

330

FIG 4

400

405

410

415

420

425

Europäisches
Patentamt

European
Patent Office

Office européen
des brevets

# EUROPEAN SEARCH REPORT

Application Number

EP 20 19 3083

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LUO WEICHAO ET AL: "Digital twin for CNC machine tool: modeling and using strategy", JOURNAL OF AMBIENT INTELLIGENCE AND HUMANIZED COMPUTING, SPRINGER BERLIN HEIDELBERG, BERLIN/HEIDELBERG, vol. 10, no. 3, 28 July 2018 (2018-07-28), pages 1129-1140, XP036708396, ISSN: 1868-5137, DOI: 10.1007/S12652-018-0946-5 [retrieved on 2018-07-28] * the whole document * | 1-15 | INV. G05B19/4069 |
| X | LUO WEICHAO ET AL: "Digital twin modeling method for CNC machine tool", 2018 IEEE 15TH INTERNATIONAL CONFERENCE ON NETWORKING, SENSING AND CONTROL (ICNSC), IEEE, 27 March 2018 (2018-03-27), pages 1-4, XP033340636, DOI: 10.1109/ICNSC.2018.8361285 [retrieved on 2018-05-18] * the whole document * | 1-15 | |

-----

-----

-/--

TECHNICAL FIELDS
SEARCHED      (IPC)

G05B

The present search report has been drawn up for all claims

| Place of search | Date of completion of the search | Examiner |
|---|---|---|
| The Hague | 10 February 2021 | Itoafa, Alex |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 20 19 3083

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHENG DE-JUN ET AL: "A Digital Twin-Driven Approach for On-line Controlling Quality of Marine Diesel Engine Critical Parts", INTERNATIONAL JOURNAL OF PRECISION ENGINEERING AND MANUFACTURING, KOREAN SOCIETY FOR PRECISION ENGINEERING, SPRINGER, vol. 21, no. 10, 11 August 2020 (2020-08-11), pages 1821-1841, XP037247789, ISSN: 2234-7593, DOI: 10.1007/S12541-020-00403-Y [retrieved on 2020-08-11] * the whole document * | 1-15 | |
| A | CN 109 615 113 A (UNIV JIANGSU SCIENCE & TECH) 12 April 2019 (2019-04-12) * the whole document * | 1-15 | |
| A | US 2017/227945 A1 (WANG ZHIGANG [US] ET AL) 10 August 2017 (2017-08-10) * paragraphs [0001], [0002], [0016] - [0050] * * paragraph [0056]; figure 8 * | 1-15 | TECHNICAL FIELDS SEARCHED (IPC) |

The present search report has been drawn up for all claims

| Place of search | Date of completion of the search | Examiner |
|---|---|---|
| The Hague | 10 February 2021 | Itoafa, Alex |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 19 3083

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2021

| Patent document cited in search report | | Publication date | Patent family member(s) | | Publication date |
|---|---|---|---|---|---|
| CN 109615113 | A | 12-04-2019 | NONE | | |
| US 2017227945 | A1 | 10-08-2017 | CN | 109154806 A | 04-01-2019 |
| | | | EP | 3411762 A1 | 12-12-2018 |
| | | | JP | 6672470 B2 | 25-03-2020 |
| | | | JP | 2019504421 A | 14-02-2019 |
| | | | TW | 201732473 A | 16-09-2017 |
| | | | TW | 201835701 A | 01-10-2018 |
| | | | US | 2017227945 A1 | 10-08-2017 |
| | | | US | 2019384252 A1 | 19-12-2019 |
| | | | WO | 2017136645 A1 | 10-08-2017 |

EPO FORM P0459

For more details about this annex : see Official Journal of the European Patent Office, No. 12/82